# EUROPEAN PATENT APPLICATION

(11) **EP 1 418 752 A1**
(43) Date of publication of application: **12.05.2004**
(21) Application number: 01954380.0
(22) Date of filing: 30.07.2001
(51) Int. Cl.: H04N 5/225

(54) **PORTABLE TERMINAL**

(71) Applicant: MITSUBISHI DENKI KABUSHIKI KAISHA, Tokyo 100-8310 (JP)
(72) Inventor: HASEGAWA, Manabu c/o MITSUBISHI DENKI K.K., Tokyo 100-8310 (JP); MICHIMORI, Atsushi c/o MITSUBISHI DENKI K.K., Tokyo 100-8310 (JP); WATANABE, Norihiro c/o MITSUBISHI DENKI K.K., Tokyo 100-8310 (JP)
(74) Representative: Sajda, Wolf E., Dipl.-Phys.
(86) International application number: PCT/JP2001/006559
(87) International publication number: WO 2003/013127

(57) **Abstract**

A mobile phone (200) includes a casing (10), an image pickup device (30) accommodated in the casing (10) and having an optical axis (30a), and a reflector plate (20) having one end (20a) and the other end (20b) and having a reflection plane (20f), wherein one end (20a) is pivotably attached to the casing (10). The reflector plate (20) is positioned in a first position in which the reflection plane (20f) intersects the optical axis (30a) so that the image pickup device (30) forms an image in a first region (301) which is reflected on the reflection plane (20f). The reflector plate (20) is pivoted from the first position to be positioned in a second position so that the image pickup device (30) forms an image in a second region (302) different from the first region (301).

## Description

### Technical Field

The present invention relates to a mobile terminal and more particularly to a mobile terminal including an image pickup device.

### Background Art

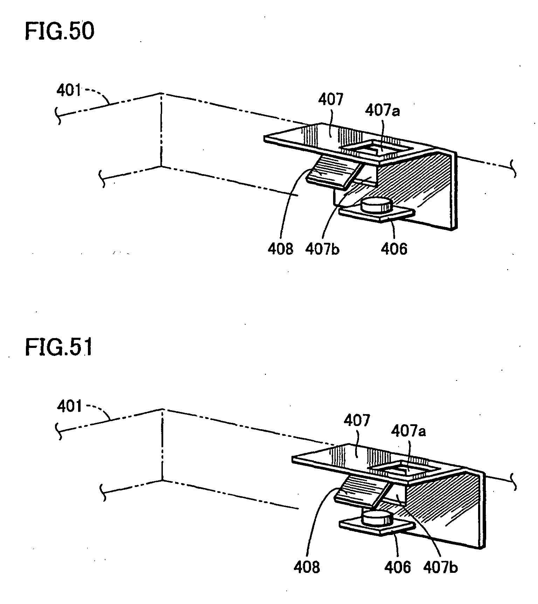

Recently, a mobile terminal including an image pickup device has been developed. In such a mobile terminal, a technique for allowing generation of images for information in two regions. Japanese Patent Laying-Open No. 11-110078 discloses mobile operating equipment capable of forming images in two regions. Figs. 50 and 51 are perspective views of the conventional mobile operating equipment disclosed in the aforementioned publication. Referring to Fig. 50, on the top of mobile operating equipment 401, a slide cover 407 is arranged to be movable from side to side. Opening portions 407a and 407b covered with transparent covers are formed on the sides of front and planar surfaces of slide cover 407. A camera 406 including an imaging unit such as a CCD (Charged-Coupled Device) is fixed at that part inside mobile operating equipment 401 which is opposite to slide cover 407. The direction of the optical axis of camera 406 is parallel to the direction that is opposite to the front surface of mobile operating equipment 401.

Slide cover 407 includes a mirror 408. Mirror 408 is inclined relative to opening portions 407a and 407b. When slide cover 407 is in a position shown in Fig. 50, opening portion 407a is positioned in the direction of the optical axis of camera 406. Camera 406 receives light from the outside in the direction opposite to the front surface of mobile operating equipment 401.

When slide cover 407 moves to the right direction to be positioned as shown in Fig. 51, mirror 408 is opposed to camera 406. Camera 406 receives external light in the direction opposite to the planar surface of mobile operating equipment 401, from opening portion 407b through mirror 408.

In the technique disclosed in the aforementioned publication, however, since slide cover 407 has to be slid, the size of mobile operating equipment is inevitably increased.

An imaging device including a first imaging optical system and a second imaging optical system and forming an image using either of these two imaging systems is shown in Japanese Patent Application No. 12-205409 filed in the name of the present inventor. In this imaging device, the first and second imaging optical systems are held by a holding member and either of the first and second imaging optical systems forms an image by positioning the holding member in either of first and second positions.

Since the imaging device proposed by the inventor still requires two imaging optical systems, the size of the imaging device is increased.

The present invention is therefore made to solve the problem described above and its object is to provide a mobile terminal allowing reduction in size.

### Disclosure of the Invention

A mobile terminal in accordance with the present invention includes a casing, an image pickup device accommodated in the casing and having an optical axis, and a reflector plate having one end and the other end and having a reflection plane, wherein one end is pivotably attached to the casing. The reflector plate is positioned in a first position in which the reflection plane intersects the optical axis so that the image pickup device forms an image in a first region which is reflected on the reflection plane. The reflector plate is pivoted from the first position to be positioned in a second position so that the image pickup device forms an image in a second region different from the first region.

In the mobile terminal configured in this manner, the reflector plate is positioned in the first position so that the image in the first region is reflected on the reflection plane for imaging, and the reflector plate is pivoted from the first position to be positioned in the second position so that an image in the second region is formed. Since the reflector plate is positioned in the first and second positions by pivoting the reflector plate in this manner, the mobile terminal can be smaller than one provided with a slide member. Furthermore, since images in two regions are formed by a single image pickup device by pivoting the reflector plate, two imaging optical systems are not required. As a result, the mobile terminal can be reduced in size.

Preferably, the reflection plane intersects the optical axis when the reflector plate is positioned in the first position, while the reflection plane does not intersect the optical axis when the reflector plate is positioned in the second position.

Preferably, the reflection plane intersects the optical axis when the reflector plate is positioned in the first position, while the reflection plane intersects the optical axis when the reflector plate is positioned in the second position.

Preferably, the mobile terminal further includes a transparent member attached to the casing to be positioned between the image pickup device and the reflector plate for sealing the image pickup device in the casing. In this case, since the image pickup device is sealed in the casing, it is possible to prevent dust, water droplet or the like from adhering to the image pickup device.

Preferably, the mobile terminal further includes a positioning portion being in contact with one end of the reflector plate for positioning the reflector plate in the first position and the second position.

Preferably, the reflector plate may be positioned in a third position in which the reflection plane is approximately orthogonal to the optical axis.

Preferably, the reflection plane includes a convex surface. In this case, the image pickup device can form an image in a broader region which is reflected on the convex surface.

Preferably, the reflection plane includes a concave surface. In this case the image pickup device can form an image of a portion of an object which is magnified and reflected using the concave surface.

### Brief Description of the Drawings

Fig. 1 is a perspective view of a mobile phone in accordance with a first embodiment of the present invention, illustrating a closed reflector plate.
Fig. 2 is a front view of the mobile phone in accordance with the first embodiment of the present invention, illustrating the closed reflector plate.
Fig. 3 is a cross sectional view taken along a line III - III in Fig. 2.
Fig. 4 is a cross sectional view showing the reflector plate in Fig. 3 in enlargement.
Fig. 5 is a perspective view of the mobile phone in accordance with the first embodiment of the present invention, illustrating the reflector plate positioned in a first position.
Fig. 6 is a front view of the mobile phone in accordance with the first embodiment of the present invention, illustrating the reflector plate positioned in the first position.
Fig. 7 is a cross sectional view taken along a line VII - VII in Fig. 6.
Fig. 8 is a cross sectional view showing the reflector plate in Fig. 7 in enlargement.
Fig. 9 is a perspective view of the mobile phone in accordance with the first embodiment of the present invention, illustrating the reflector plate positioned in a second position.
Fig. 10 is a front view of the mobile phone in accordance with the first embodiment of the present invention, illustrating the reflector plate positioned in the second position.
Fig. 11 is a cross sectional view taken along a line XI - XI in Fig. 10.
Fig. 12 is a cross sectional view showing the reflector plate in Fig. 11 in enlargement.
Fig. 13 is a perspective view of the mobile phone in accordance with a second embodiment of the present invention, illustrating the closed reflector plate.
Fig. 14 is a front view of the mobile phone in accordance with the second embodiment of the present invention, illustrating the closed reflector plate.
Fig. 15 is a cross sectional view taken along a line XV - XV in Fig. 14.
Fig. 16 is a cross sectional view showing the reflector plate in Fig. 15 in enlargement.
Fig. 17 is a perspective view of the mobile phone in accordance with the second embodiment of the present invention, illustrating the reflector plate positioned in a first position.
Fig. 18 is a front view of the mobile phone in accordance with the second embodiment of the present invention, illustrating the reflector plate positioned in the first position.
Fig. 19 is a cross sectional view taken along a line XIX - XIX in Fig. 18.
Fig. 20 is a cross sectional view showing the reflector plate in Fig. 19 in enlargement.
Fig. 21 is a perspective view of the mobile phone in accordance with the second embodiment of the present invention, illustrating the reflector plate positioned in a second position.
Fig. 22 is a front view of the mobile phone in accordance with the second embodiment of the present invention, illustrating the reflector plate positioned in the second position.
Fig. 23 is a cross sectional view taken along a line XXIII - XXIII in Fig. 22.
Fig. 24 is a cross sectional view showing the reflector plate in Fig. 23 in enlargement.
Fig. 25 is a perspective view of the mobile phone in accordance with a third embodiment of the present invention, illustrating the closed reflector plate.
Fig. 26 is a front view of the mobile phone in accordance with the third embodiment of the present invention, illustrating the closed reflector plate.
Fig. 27 is a cross sectional view taken along a line XXVII - XXVII in Fig. 26.
Fig. 28 is a cross sectional view showing the reflector plate in Fig. 27 in enlargement.
Fig. 29 is a perspective view of the mobile phone in accordance with the third embodiment of the present invention, illustrating the reflector plate positioned in a first position.
Fig. 30 is a front view of the mobile phone in accordance with the third embodiment of the present invention, illustrating the reflector plate positioned in the first position.
Fig. 31 is a cross sectional view taken along a line XXXI - XXXI in Fig. 30.
Fig. 32 is a cross sectional view showing the reflector plate in Fig. 31 in enlargement.
Fig. 33 is a perspective view of the mobile phone in accordance with the third embodiment of the present invention, illustrating the reflector plate positioned in a second position.
Fig. 34 is a front view of the mobile phone in accordance with the third embodiment of the present invention, illustrating the reflector plate positioned in the second position.
Fig. 35 is a cross sectional view taken along a line XXXV - XXXV in Fig. 34.
Fig. 36 is a cross sectional view showing the reflector plate in Fig. 35 in enlargement.
Fig. 37 is a perspective view of the mobile phone in accordance with a fourth embodiment of the present invention, illustrating the closed reflector plate.
Fig. 38 is a front view of the mobile phone in accordance with the fourth embodiment of the present invention, illustrating the closed reflector plate.
Fig. 39 is a cross sectional view taken along a line XXXIX - XXXIX in Fig. 38.
Fig. 40 is a cross sectional view showing the reflector plate in Fig. 39 in enlargement.
Fig. 41 is a perspective view of the mobile phone in accordance with the fourth embodiment of the present invention, illustrating the reflector plate positioned in a first position.
Fig. 42 is a front view of the mobile phone in accordance with the fourth embodiment of the present invention, illustrating the reflector plate positioned in the first position.
Fig. 43 is a cross sectional view taken along a line XLIII - XLIII in Fig. 42.
Fig. 44 is a cross sectional view showing the reflector plate in Fig. 43 in enlargement.
Fig. 45 is a perspective view of the mobile phone in accordance with the fourth embodiment of the present invention, illustrating the reflector plate positioned in a second position.
Fig. 46 is a front view of the mobile phone in accordance with the fourth embodiment of the present invention, illustrating the reflector plate positioned in the second position.
Fig. 47 is a cross sectional view taken along a line XLVII - XLVII in Fig. 46.
Fig. 48 is a cross sectional view showing the reflector plate in Fig. 47 in enlargement.
Fig. 49 is a cross sectional view of the mobile phone in accordance with a fifth embodiment of the present invention, illustrating the reflector plate positioned in a second position.
Fig. 50 is a perspective view of conventional mobile operating equipment.
Fig. 51 is a perspective view of the conventional mobile operating equipment.

### Best Modes for Carrying Out the Invention

### (First Embodiment)

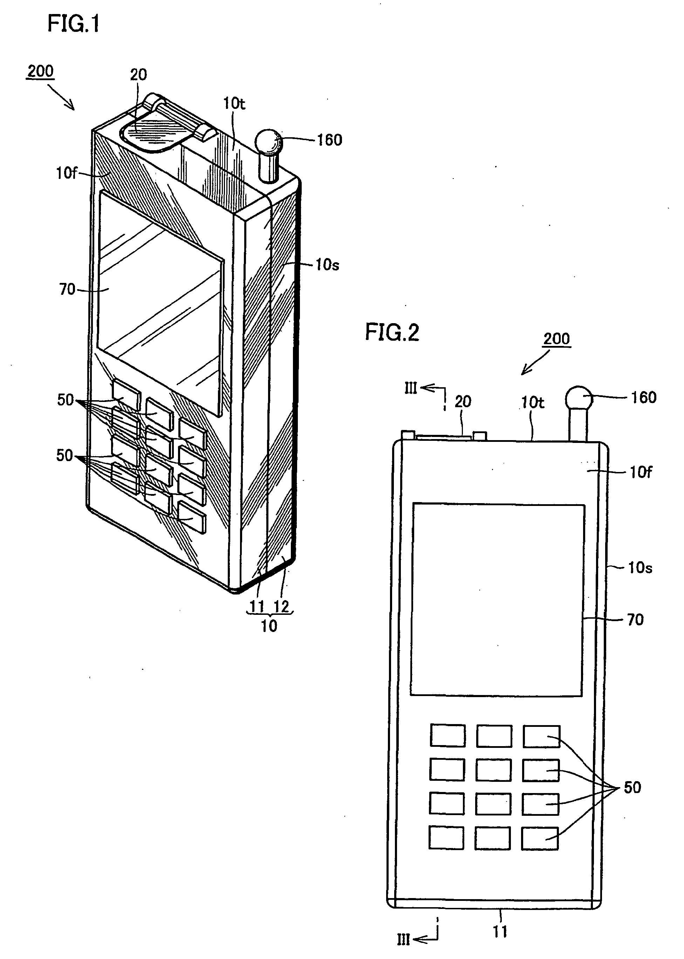

Fig. 1 is a perspective view of a mobile phone in accordance with a first embodiment of the present invention, illustrating a closed reflector plate. Fig. 2 is a front view of the mobile phone in accordance with the first embodiment of the present invention, illustrating the closed reflector plate. Referring to Figs. 1 and 2, a mobile phone 200 as a mobile terminal has a casing 10. Casing 10 is formed of a front case 11 and a rear case 12, and front case 11 is joined to rear case 12 to form casing 10.

Casing 10 has a main surface 10f, a top surface 10t, and a side surface 10s. Main surface 10f is approximately rectangular, and main surface 10f is provided with a window 70. Window 70 is formed of a transparent material, and a liquid crystal display is arranged at the back of window 70. The user can visually recognize character information and the like shown on the liquid crystal display.

Main surface 10f is provided with a plurality of push buttons 50. Push button 50 is a member pushed by a person with his/her hand for entering information, and the information entered by pushing push button 50 is usually displayed on the liquid crystal display (not shown), so that this information can be visually recognized through window 70. It is noted that a multi-function switch may be provided in addition to push button 50.

An antenna 160 is provided on top surface 10t. Antenna 160 is positioned in two positions in which it is mostly accommodated in casing 10 of mobile phone 200 as shown in Fig. 2 and in which it is mostly protruded from casing 10 of mobile phone 200. A reflector plate 20 is attached to top surface 10t.

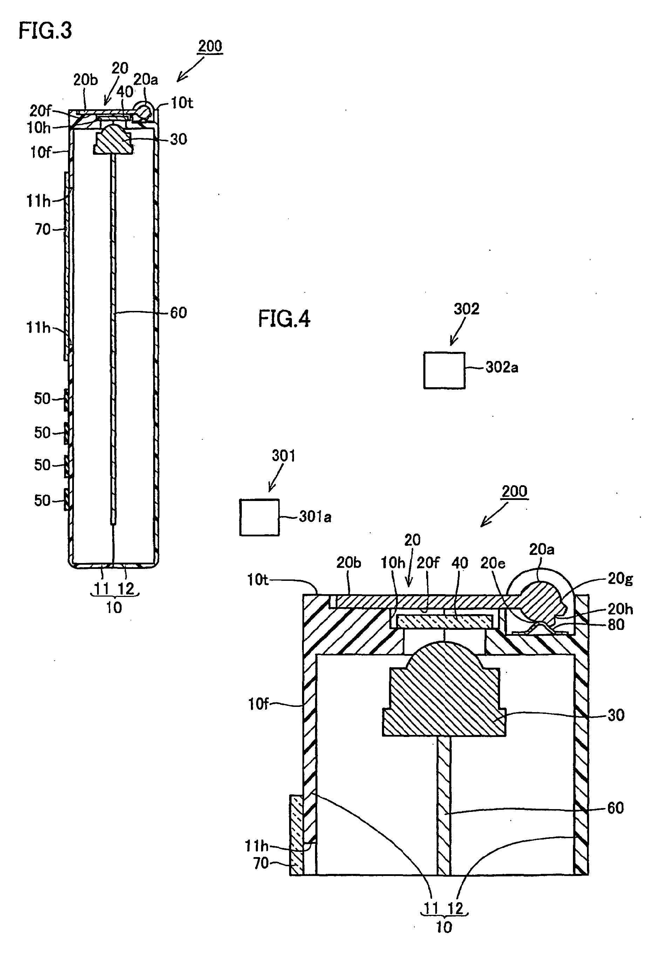

Fig. 3 is a cross sectional view taken along a line III - III in Fig. 2. Referring to Fig. 3, a substrate 60 is positioned in a space enclosed with front case 11 and rear case 12 of casing 10. Various electronics rest on substrate 60 to form an electronic circuit. An image pickup device 30 rests at an end portion of substrate 60. Image pickup device 30 is formed of a CCD or a CMOS (complementary metal-oxide semiconductor). In casing 10, front case 11 and rear case 12 are joined to each other to form an opening 10h. A protective window 40 is fitted in opening 10h. Protective window is formed of a transparent member and seals image pickup device 30 in the space within casing 10.

Reflector plate 20 is attached to casing 10 to cover protective window 40. Reflector plate 10 is attached on the side of top surface 10t of casing 10. Reflector plate 20 has one end 20a and the other end 20b. Reflector plate 20 also has a reflection plane 20f on which light is reflected.

Front case 11 is provided with an opening 11h. Window 70 is provided to seal opening 11h. A plurality of push buttons 50 are also arranged on front case 11.

Fig. 4 is a cross sectional view showing the reflector plate in Fig. 3 in enlargement. Referring to Fig. 4, reflector plate 20 has one end 20a and the other end 20b. One end 20a has a cylindrical shape and is pivotably attached to casing 10. Three concave portions 20e, 20h and 20g are provided on the outer circumferential portion of one end 20a. The respective concave portions 20e, 20h and 20g have such a shape to receive a leaf spring 80 shaped in a protruding manner. Although concave portions 20e, 20h and 20g are positioned at approximately regular intervals on the outer circumferential surface, these concave portions 20e, 20h and 20g may be provided at irregular intervals.

Leaf spring 80 is fixed on rear case 12 of casing 10. Leaf spring 80 has flexibility and is fitted in concave portions 20e, 20h and 20g to force these concave portions 20e, 20h and 20g in the direction of the center of pivoting. It is noted that leaf spring 80 may be formed, for example, like a pawl engaging with concave portions 20e, 20h and 20g as long as it can secure concave portions 20e, 20h and 20g so that concave portions 20e, 20h and 20g do not pivot.

Reflector plate 20 has reflection plane 20f. Reflection plane 20f has the reflectance of light greater than the absorptance and transmissivity, and reflection plane 20f is formed by mirror finish. Also it may be plated with silver or the like. Reflection plane 20f is formed of a flat surface without curvature.

The images of a first object 301a present in a first region 301 and of a second object 302a present in a second region 302 can be formed by pivoting reflector plate 20.

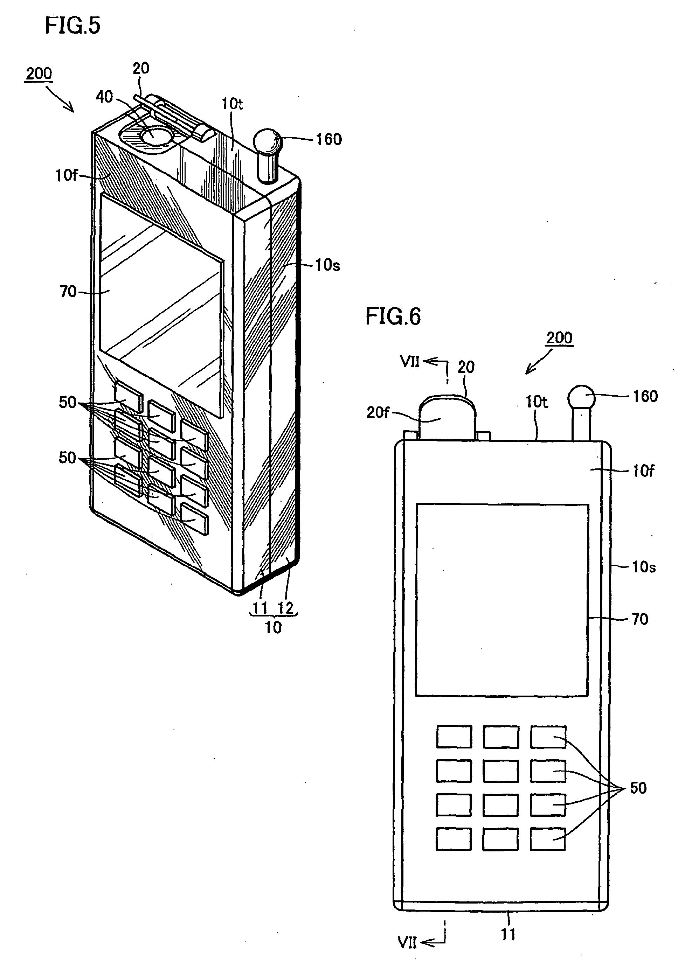

Fig. 5 is a perspective view of the mobile phone in accordance with the first embodiment of the present invention, illustrating the reflector plate positioned in a first position. Fig. 6 is a front view of the mobile phone in accordance with the first embodiment of the present invention, illustrating the reflector plate positioned in the first position. Referring to Figs. 5 and 6, reflector plate 20 is pivoted from the state shown in Fig. 4 to reveal protective window 40 which was covered with reflector plate 20. Protective window 40 has a disc-like shape and is embedded in casing 10. The distance between reflector plate 20 and protective window 40 is greater than that in Fig. 4. Reflection plate 20f is positioned to face protective window 40.

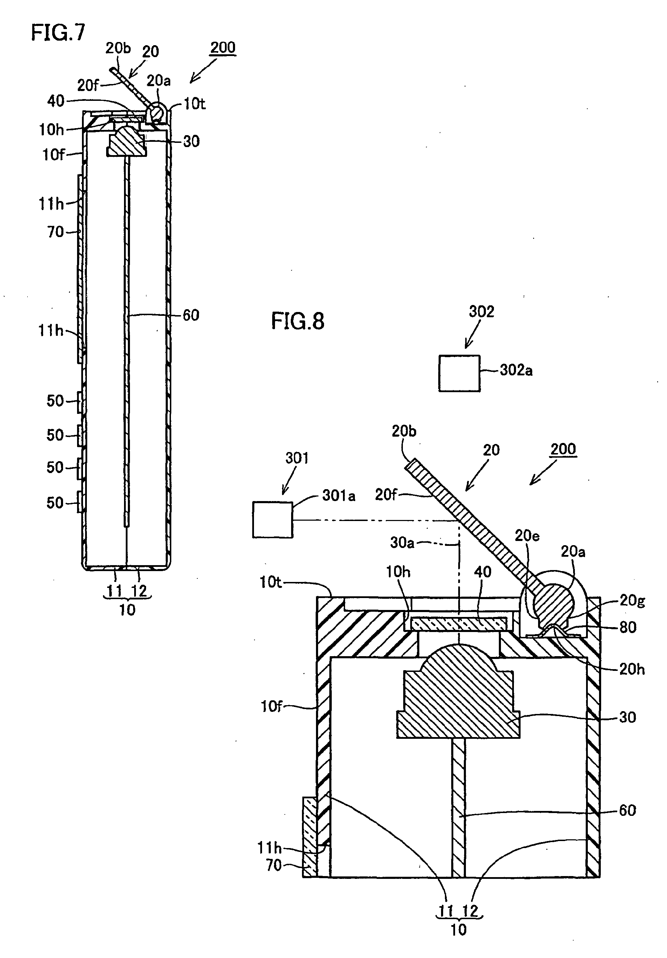

Fig. 7 is a cross sectional view taken along a line VII - VII in Fig. 6. Referring to Fig. 7, when reflector plate 20 is pivoted about 45° from the position shown in Fig. 4 in the direction in which reflector plate 20 is away from top surface 10t about one end 20a, reflector plate 20 is positioned in the first position shown in Fig. 7. Reflection plane 20f of reflector plate 20 reflects light from the outside and directs the light to image pickup device 30. Image pickup device 30 can thereby form an image from the outside.

Fig. 8 is a cross sectional view showing the reflector plate in Fig. 7 in enlargement. Referring to Fig. 8, in the first position, concave portion 20h is fitted on leaf spring 80, of concave portions 20e, 20h and 20g provided on one end 20a of reflector plate 20. Reflector plate 20 is thereby positioned from the state shown in Fig. 4 to the position in which reflector plate 20 is pivoted about 45° about one end 20a. Optical axis 30a of image pickup device 30 intersects reflection plane 20f of reflector plate 20 for reflection on reflection plane 20f. The image of first object 301a positioned in first region 301 is then reflected on reflection plane 20f to reach image pickup device 30. Image pickup device 30 can therefore form the image of first object 301a. It is noted that since protective window 40 is transparent, the image of first object 301a is formed at image pickup device 30 without being blocked by protective window 40.

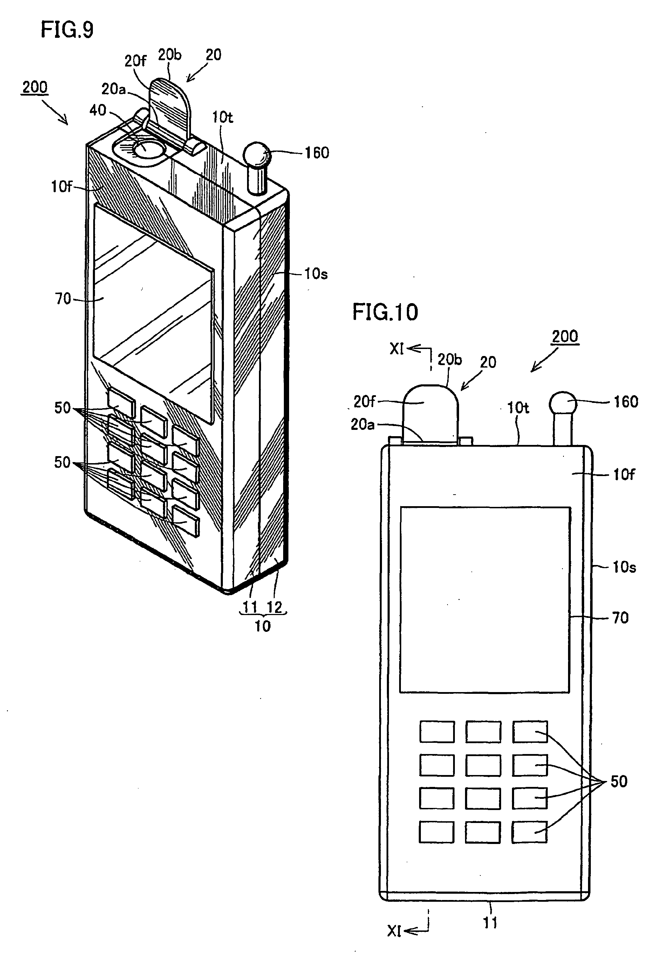

Fig. 9 is a perspective view of the mobile phone in accordance with the first embodiment of the present invention, illustrating the reflector plate positioned in a second position. Fig. 10 is a front view of the mobile phone in accordance with the first embodiment of the present invention, illustrating the reflector plate positioned in the second position. Referring to Figs. 9 and 10, when reflector plate 20 is pivoted about 45° from the position shown in Fig. 8, reflector plate 20 is positioned to extend approximately orthogonally to top surface 10t as shown in Figs. 9 and 10. In Figs. 9 and 10, reflector plate 20 is positioned in the second position. The distance between the other end 20b and top surface 10t is greater than that in the first position shown in Fig. 8. Reflection plane 20f extends approximately parallel to main surface 10f.

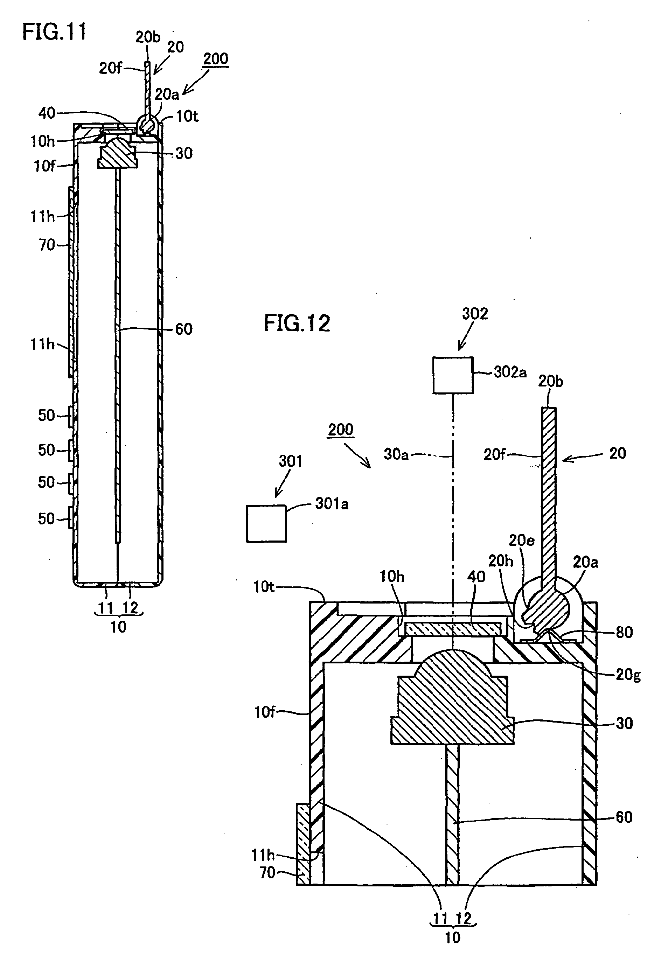

Fig. 11 is a cross sectional view taken along a line XI - XI in Fig. 10. Referring to Fig. 11, when reflector plate 20 is positioned in the second position, main surface 10f and reflection plane 20f are parallel. Since protective window 40 is not covered with reflector plate 20, image pickup device 30 can form an image of an object present in the longitudinal direction of casing 10.

Fig. 12 is a cross sectional view showing the reflector plate in Fig. 11 in enlargement. Referring to Fig. 12, when reflector plate 20 is positioned in the second position, concave portion 20g provided on one end 20a is fitted on leaf spring 80. Reflector plate 20 is positioned to be upright relative to top surface 10t. The other end 20b of reflector plate 20 is positioned at a position that is farthest from top surface 10t. Optical axis 30a of image pickup device 30 extends approximately parallel to reflection plane 20f of reflector plate 20. Image pickup device 30 can form an image of a second object 302a present in a second region 302. It is noted that optical axis 30a extends approximately parallel to the direction in which substrate 60 extends. Optical axis 30a does not intersect reflection plane 20f, and image pickup device 30 can form the image of second object 302a which is not reflected on reflection plane 20f.

Mobile phone 200 as a mobile terminal as described above includes casing 10, image pickup device 30 accommodated in casing 10 and having optical axis 30a, and reflector plate 20 having one end 20a pivotably attached to casing 10 and the other end 20b and having reflection plane 20f. Reflector plate 20 is positioned in the first position (Fig. 8) in which reflection plane 20f intersects optical axis 30a so that image pickup device 30 forms the image in first region 301 which is reflected on reflection plate 20f. Reflector plate 20 is pivoted from the first position to be positioned in the second position (Fig. 12) so that image pickup device 30 forms the image in second region 302 different from first region 301.

Reflection plane 20f intersects optical axis 30a when reflector plate 20 is positioned in the first position, while reflection plane 20f does not intersect optical axis 30a when reflector plate 20 is positioned in the second position.

In mobile phone 200, reflector plate 20 may be positioned in a third position (Fig. 4) in which reflection plane 20f is approximately orthogonal to optical axis 30a.

In mobile phone 200 configured in this manner, the images of first object 301a in first region 301 and of second object 302a in second region 302 can be formed by pivoting reflector plate 20 about one end 20a to a prescribed position. Therefore mobile phone 200 can be reduced in size and weight as compared with the conventional device having a camera which is to be slid or having two optical systems.

Mobile phone 200 further includes protective window 40 as a transparent member attached to casing 10 to be positioned between image pickup device 30 and reflector plate 20 for sealing image pickup device 30 in casing 10. This protective window 40 can prevent water droplet or dust from the outside from adhering to image pickup device 30 so that a sharp image can be formed. Furthermore, failure of image pickup device 30 can be prevented.

Mobile phone 200 further includes leaf spring 80 as a positioning portion being in contact with one end 20a of reflector plate 20 for positioning reflector plate 20 in the first position and the second position. This leaf spring 80 ensures reflector plate 20 to be positioned in the first and second positions. The reliability of the device is therefore improved.

### (Second Embodiment)

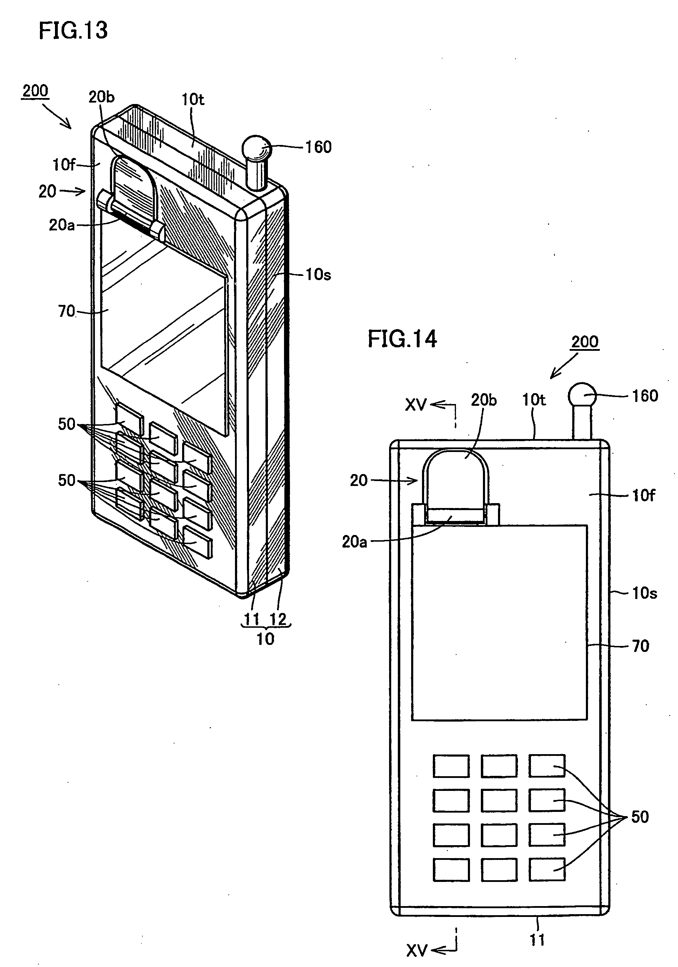

Fig. 13 is a perspective view of the mobile phone in accordance with a second embodiment of the present invention, illustrating the closed reflector plate. Fig. 14 is a front view of the mobile phone in accordance with the second embodiment of the present invention, illustrating the closed reflector plate. Referring to Figs. 13 and 14, the mobile phone in accordance with the second embodiment of the present invention differs from mobile phone 200 in accordance with the first embodiment in that reflector plate 20 is provided on main surface 10f. One end 20a of reflector plate 20 is pivotably attached to the side of window 70. The other end 20b is arranged on the side of top surface 10t. It is noted that top surface 10t is only provided with antenna 160 and not provided with a reflector plate.

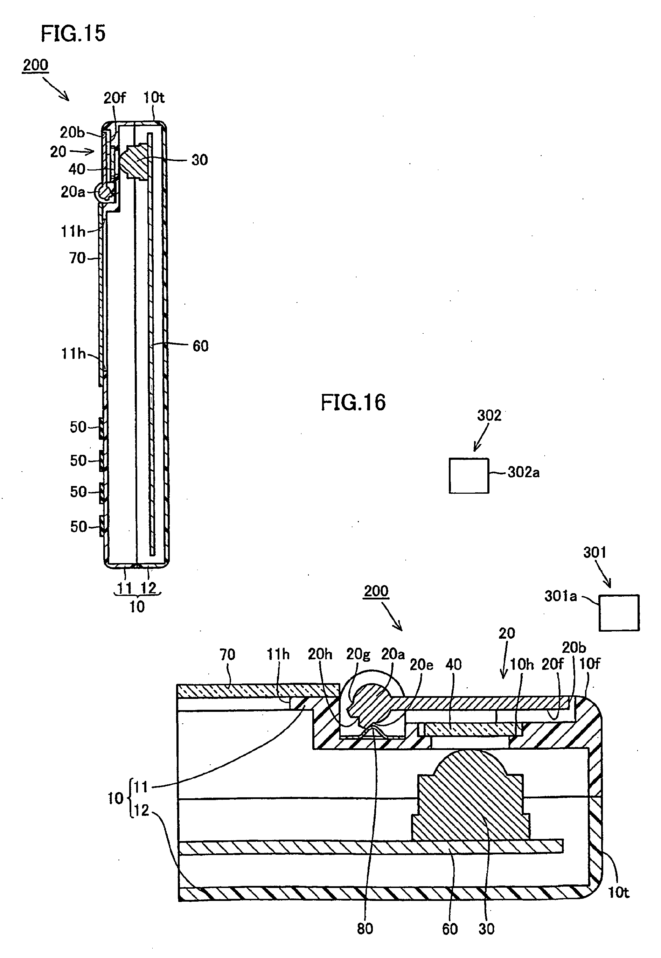

Fig. 15 is a cross sectional view taken along a line XV - XV in Fig. 14. Referring to Fig. 15, substrate 60 is arranged within casing 10. Substrate 60 is arranged closer to the side of rear case 12 as compared with the first embodiment. Image pickup device 30 is fixed on substrate 60. Image pickup device 30 is arranged on the largest face of the substrate. Furthermore, the normal direction of the largest face of substrate 60 is parallel to the optical axis of image pickup device 30. Protective window 40 is fitted in front case 11. Protective window 40 seals image pickup device 30 in casing 10. Protective window 40 is provided between image pickup device 30 and reflector plate 20. One end 20a of reflector plate 20 is pivotably attached to front case 11.

Fig. 16 is a cross sectional view showing the reflector plate in Fig. 15 in enlargement. Referring to Fig. 16, that part of image pickup device 30 which has a domed shape provided with a lens is positioned to face opening 10h. Protective window 40 is provided to fit into opening 10h. Protective window 40 is formed of a transparent member such as glass. Leaf spring 80 is provided on front case 11 next to protective window 40. Leaf spring 80 has elasticity and may deflect in a prescribed direction.

Reflector plate 20 has reflection plane 20f. Reflection plane 20f faces toward protective window 40. Reflection plane 20f is formed by mirror-polish, silver-plating or the like and has the reflectance of light on its surface being greater than the absorptance and transmissibity. Reflector plate 20 has one end 20a and the other end 20b. Concave portions 20e, 20h and 20g are formed on the outer circumferential surface of one end 20a. Concave portions 20e, 20h and 20g are arranged at approximately regular intervals and the respective concave portions 20e, 20h and 20g are fitted on leaf spring 80.

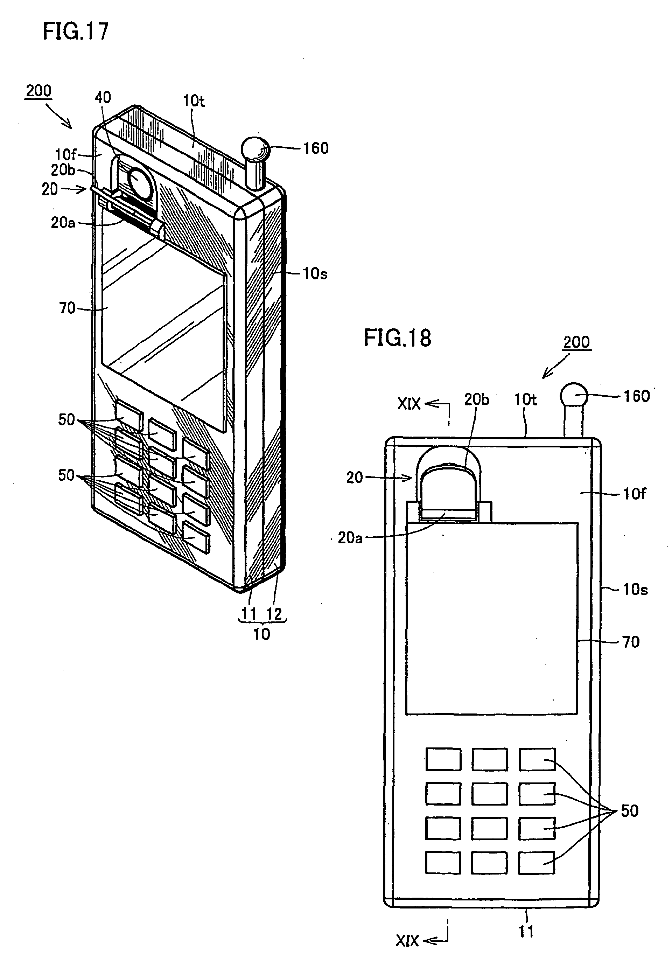

Fig. 17 is a perspective view of the mobile phone in accordance with the second embodiment of the present invention, illustrating the reflector plate positioned in a first position. Fig. 18 is a front view of the mobile phone in accordance with the second embodiment of the present invention, illustrating the reflector plate positioned in the first position. Referring to Figs. 17 and 18, reflector plate 20 is pivoted from the state shown in Fig. 15 to reveal protective window 40 which was covered with reflector plate 20. Protective window has a disk-like shape and is embedded in casing 10. Reflection plane 20f is positioned to face protective window 40.

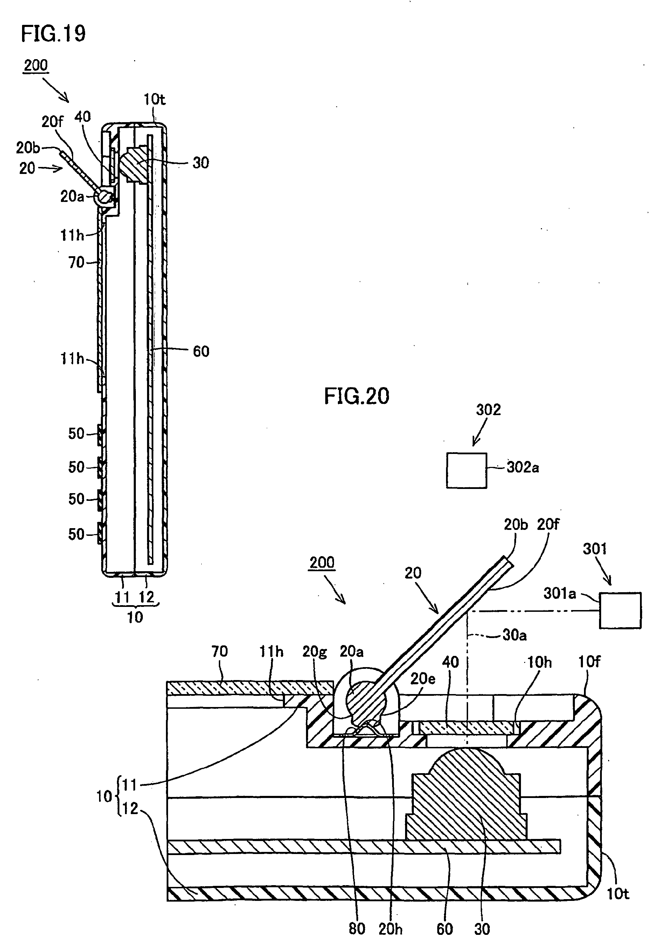

Fig. 19 is a cross sectional view taken along a line XIX - XIX in Fig. 18. Referring to Fig. 19, when reflector plate 20 is pivoted from the position shown in Fig. 16 about 45° in a direction that is far away from top surface 10t about one end 20a, reflector plate 20 is positioned in the first position shown in Fig. 19. Reflection plane 20f of reflector plate 20 reflects light from the outside and directs the light to image pickup device 30. Image pickup device 30 can thereby form an image from the outside.

Fig. 20 is a cross sectional view showing the reflector plate in Fig. 19 in enlargement. Referring to Fig. 20, in the first position, concave portion 20h is fitted on leaf spring 80, of concave portions 20e, 20h and 20g provided on one end 20a of reflector plate 20. Reflector plate 20 is thus positioned from the state shown in Fig. 16 to the position in which reflector plate 20 is pivoted about 45° about one end 20a. Optical axis 30a of image pickup device 30 intersects reflection plane 20f of reflector plate 20 for reflection on reflection plane 20f. The image of first object 301a positioned in first region 301 is therefore reflected on reflection plane 20f to reach image pickup device 30. Image pickup device 30 can therefore form the image of first object 301a. It is noted that since protective window 40 is transparent, the image of first object 301a is formed at image pickup device 30 without being blocked by protective window 40.

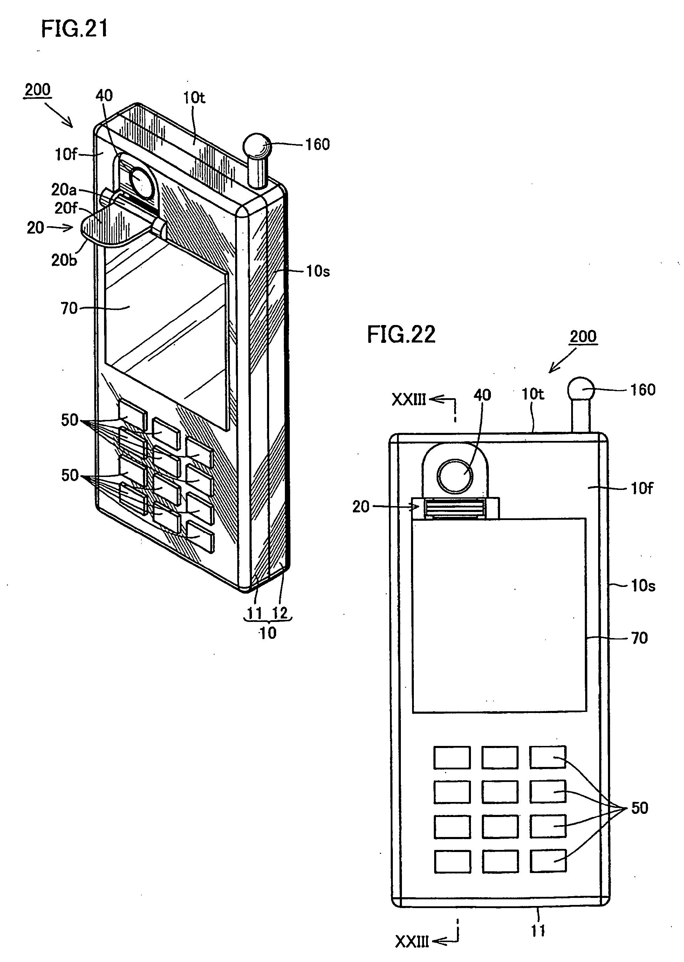

Fig. 21 is a perspective view of the mobile phone in accordance with the second embodiment of the present invention, illustrating the reflector plate positioned in a second position. Fig. 22 is a front view of the mobile phone in accordance with the second embodiment of the present invention, illustrating the reflector plate positioned in the second position. Referring to Figs. 21 and 22, when reflector plate 20 is pivoted about 45° from the position shown in Fig. 20, reflector plate 20 is positioned to extend approximately orthogonally to main surface 10f. In Figs. 21 and 22, reflector plate 20 is positioned in the second position. Reflection plane 20f extends to be approximately orthogonal to main surface 10f.

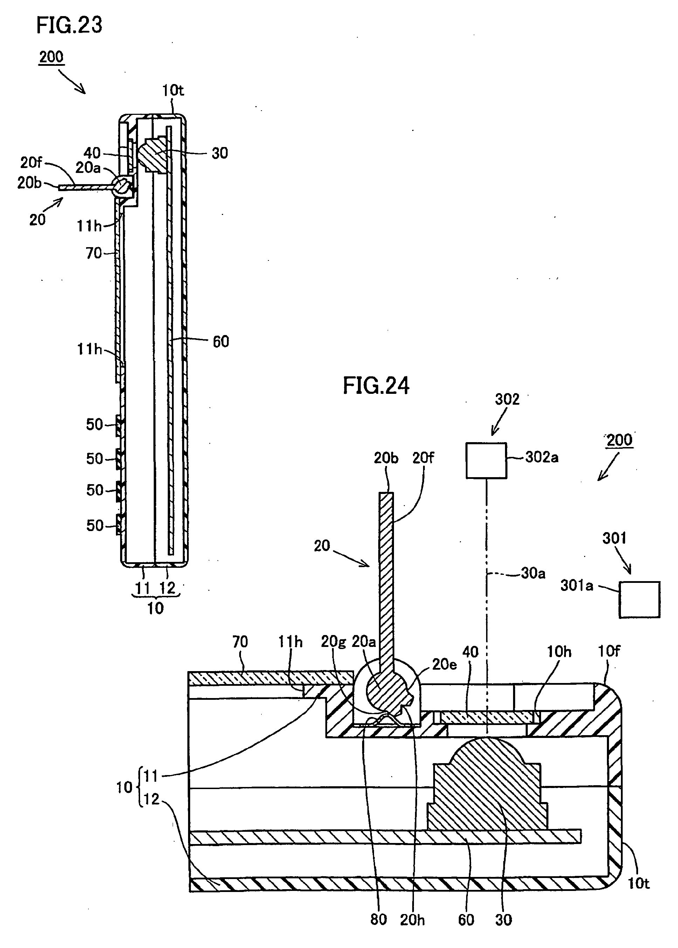

Fig. 23 is a cross sectional view taken along a line XXIII - XXIII in Fig. 22. Referring to Fig. 23, when reflector plate 20 is positioned in the second position, main surface 10f is approximately orthogonal to reflection plane 20f. Since protective window 40 is not converted with reflector plate 20, image pickup device 30 can form an image present in the direction that is orthogonal to the longitudinal direction of casing 10.

Fig. 24 is a cross sectional view showing the reflector plate in Fig. 23 in enlargement. Referring to Fig. 24, when reflector plate 20 is positioned in the second position, concave portion 20g provided on one end 20a is fitted on leaf spring 80. Reflector plate 20 is positioned to be upright relative to main surface 10f. The other end 20b of reflector plate 20 is positioned in a position that is farthest from top surface 10t. Optical axis 30a of image pickup device 30 extends approximately parallel to reflection plane 20f of reflector plate 20. Image pickup device 30 may form the image of second object 302a present in second region 302. It is noted that optical axis 30a extends approximately parallel to the normal direction of substrate 60. Optical axis 30a does not intersect reflection plane 20f, and image pickup device 30 can form the image of second object 302a which is not reflected on reflection plane 20f.

Mobile phone 200 configured in this manner in accordance with the second embodiment of the present invention has the similar effect as mobile phone 200 in accordance with the first embodiment.

### (Third Embodiment)

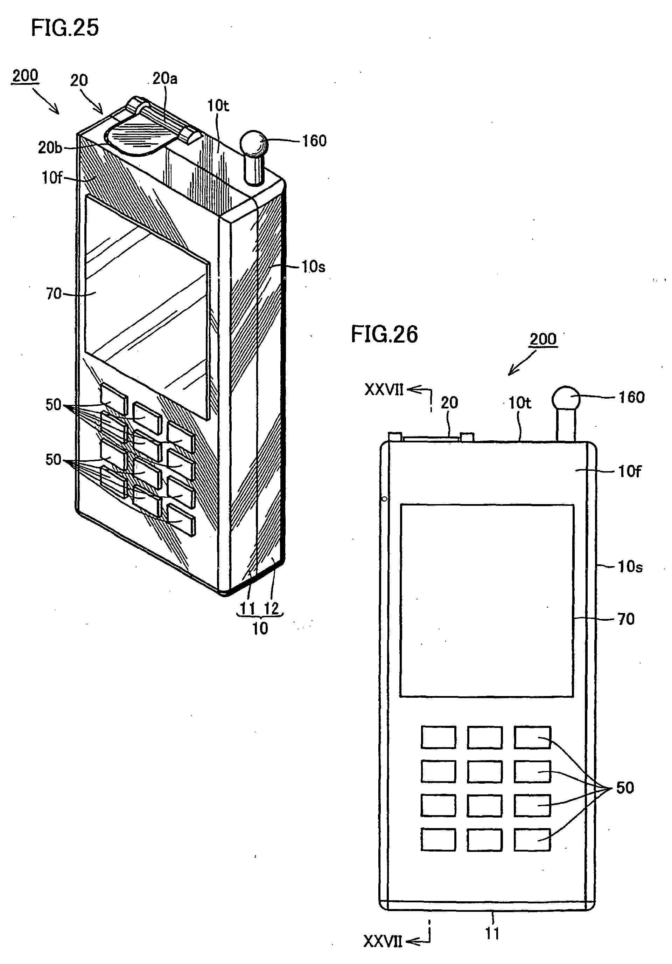

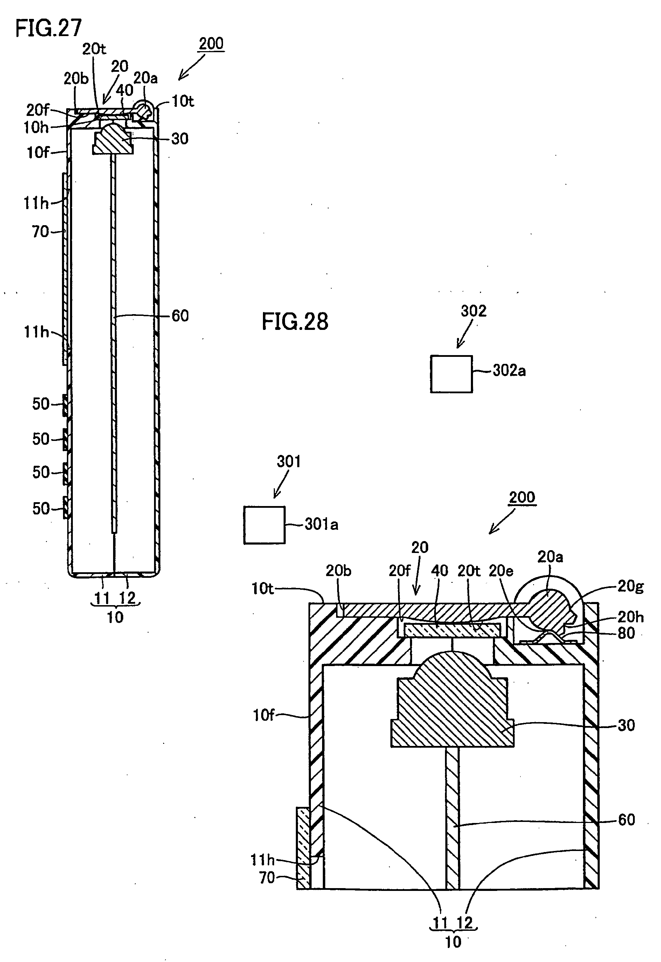

Fig. 25 is a perspective view of the mobile phone in accordance with a third embodiment of the present invention, illustrating the closed reflector plate. Fig. 26 is a front view of the mobile phone in accordance with the third embodiment of the present invention for illustrating the closed reflector plate. Fig. 27 is a cross sectional view taken along a line XXVII-XXVII in Fig. 26. Referring to Figs. 25 to 27, mobile phone 200 in accordance with the third embodiment of the present invention differs from the mobile phone in accordance with the first embodiment in that reflection plane 20f of reflector plate 20 includes a convex surface 20t. Convex surface 20t is shaped like an arc and does not contact with the protective window 40 even at the most protrudent portion. Convex surface 20t is also formed by mirror-finish or silver plating and has the reflectance greater than the absorptance and transmissivity.

Fig. 28 is a cross sectional view showing the reflector plate in Fig. 27 in enlargement. Referring to Fig. 28, reflection plane 20f of reflector plate 20 has convex surface 20t. Convex surface 20t is shaped like an arc and the center of its curvature is present on the optical axis of image pickup device 30. Convex surface 20t protrudes from reflection plane 20f and is arranged to face protective window 40.

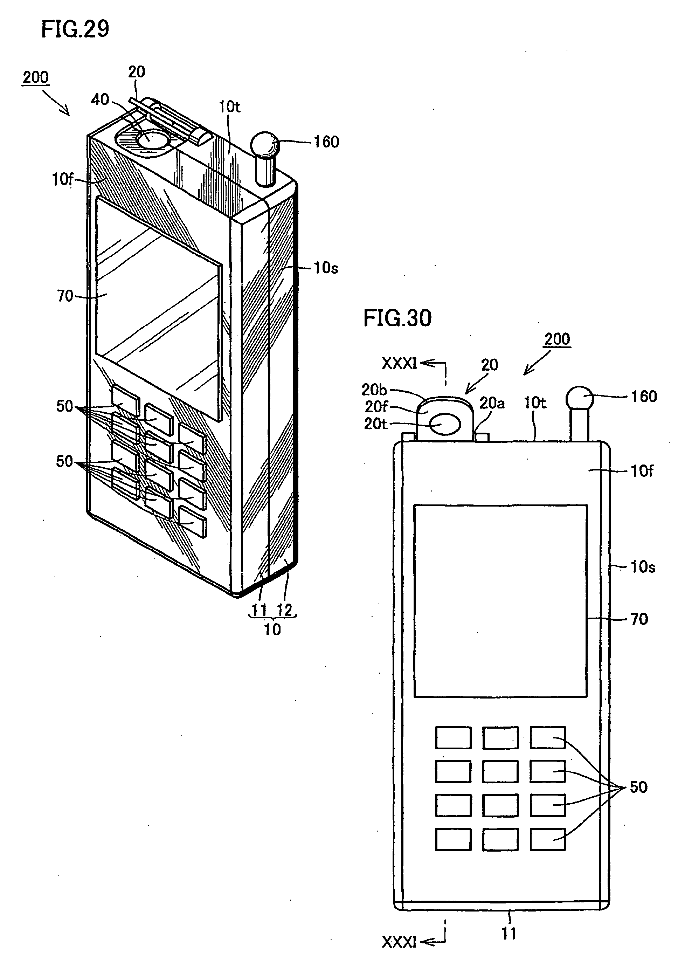

Fig. 29 is a perspective view of the mobile phone in accordance with the third embodiment of the present invention, illustrating the reflector plate positioned in a first position. Fig. 30 is a front view of the mobile phone in accordance with the third embodiment of the present invention, illustrating the reflector plate positioned in the first position. Referring to Figs. 29 and 30, reflector plate 20 is pivoted from the state shown in Fig. 28 to reveal protective window 40 which was covered with reflector plate 20. Protective window 40 has a disc-like shape and is embedded in casing 10. Reflection plane 20f is positioned to face protective window 40.

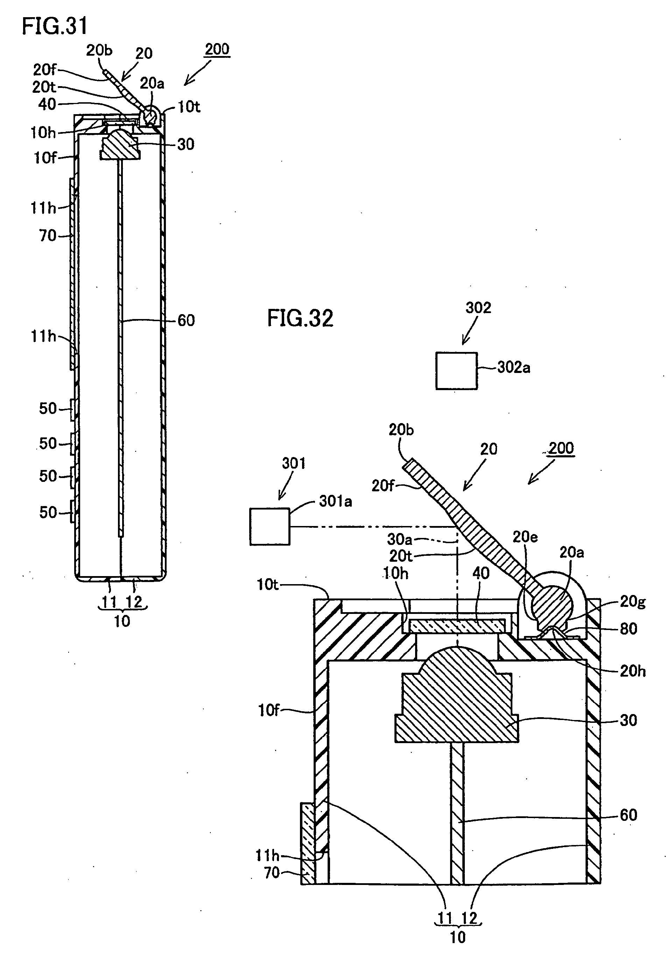

Fig. 31 is a cross sectional view taken along a line XXXI - XXXI in Fig. 30. Referring to Fig. 31, when reflector plate 20 is pivoted about 45° from the position shown in Fig. 28 about one end 20a in a direction that is far away from top surface 10t, reflector plate 20 is positioned in the first position shown in Fig. 31. Reflection plane 20f of reflector plate 20 reflects the light from the outside and directs the light to image pickup device 30. Image pickup device can thereby form an image from the outside. Reflection plane 20f has convex surface 20t.

Fig. 32 is a cross sectional view showing the reflector plate in Fig. 31 in enlargement. Referring to Fig. 32, in the first position, concave portion 20h is fitted on leaf spring 80, of concave portions 20e, 20h and 20g provided on one end 20a of reflector plate 20. Reflector plate 20 is thereby positioned from the state shown in Fig. 28 to the position in which reflector plate 20 is pivoted about 45° about one end 20a. Optical axis 30a of image pickup device 30 intersects reflection plane 20f of reflector plate 20 for reflection on convex surface 20t of reflection plane 20f. The image of first object 301a positioned in first region 301 is thus reflected on reflection plane 20f to reach image pickup device 30. Image pickup device 30 can thus form the image of first object 301a. It is noted that since protective window is transparent, the image of first object 301a is formed at image pickup device 30 without being blocked by protective window 40.

Since reflection plane 20f has convex surface 20t, the image in a broader region can be reflected and formed at image pickup device 30. In other words, it is possible to form an image of an object present not only in first region 301 but also in the vicinity thereof in a broader area.

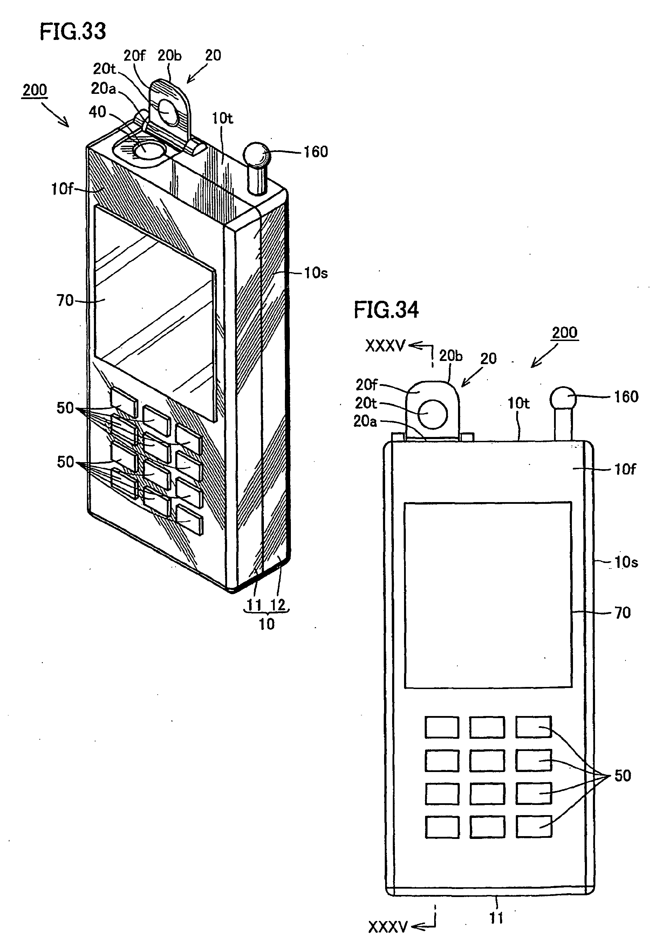

Fig. 33 is a perspective view of the mobile phone in accordance with the third embodiment of the present invention, illustrating the reflector plate positioned in a second position. Fig. 34 is a front view of the mobile phone in accordance with the third embodiment of the present invention, illustrating the reflector plate positioned in the second position. Referring to Figs. 33 and 34, when reflector plate 20 is pivoted about 45° from the position shown in Fig. 32, reflector plate 20 is positioned to extend approximately orthogonally to top surface 10t as shown in Figs. 33 and 34. In Figs. 33 and 34, reflector plate 20 is positioned in the second position. The distance between the other end 20b and top surface 10t is greater than that in the first position shown in Fig. 32. Reflection plane 20f extends approximately parallel to main surface 10f.

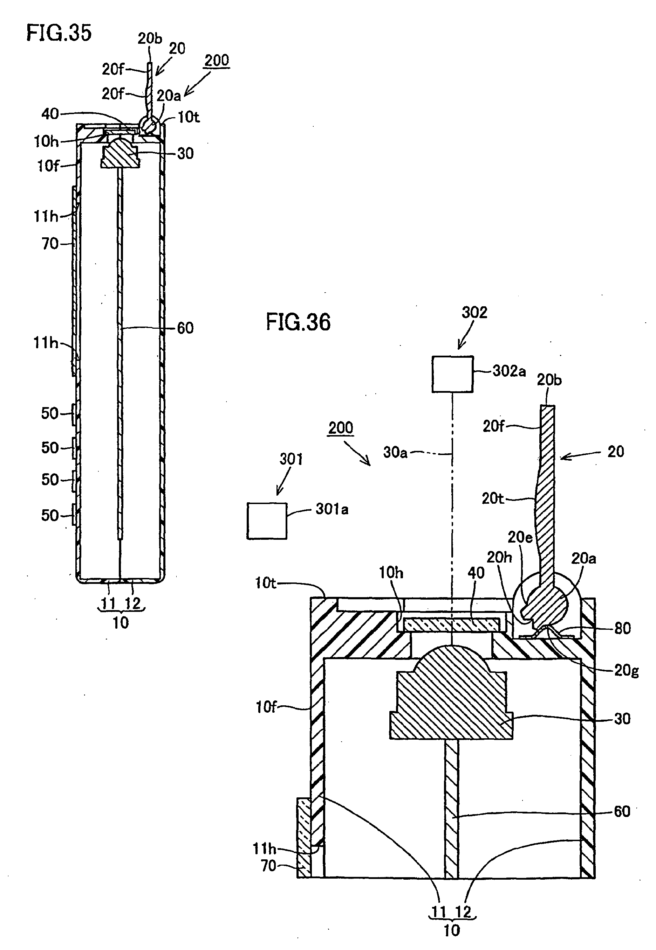

Fig. 35 is a cross sectional view taken along a line XXXV - XXXV in Fig. 34. Referring to Fig. 35, when reflector plate 20 is positioned in the second position, main surface 10f is approximately parallel to reflection plane 20f. Since protective window 40 is not covered with reflector plate 20, image pickup device 30 can form an image of an object present in the longitudinal direction of casing 10. It is noted that in Fig. 35 convex surface 20t does not function.

Fig. 36 is a cross sectional view showing the reflector plate in Fig. 35 in enlargement. Referring to Fig. 36, when reflector plate 20 is positioned in the second position, concave portion 20g provided on one end 20a is fitted on leaf spring 80. Reflector plate 20 is positioned to be upright relative to top surface 10t. The other end 20b of reflector plate 20 is positioned in the position that is farthest from top surface 10t. Optical axis 30a of image pickup device 30 extends approximately parallel to reflection plane 20f of reflector plate 20. Image pickup device 30 can form the image of second object 302a present in second region 302. It is noted that optical axis 30a extends approximately parallel to the direction in which substrate 60 extends. Optical axis 30a does not intersect reflection plane 20f, and image pickup device 30 can form the image of second object 302a which is not reflected on reflection plane 20f. It is noted that since light is not reflected on convex surface 20t of reflection plane 20f, it is not possible to form the image in a broader area as compared with the positioning in the first position shown in Fig. 32.

The mobile phone configured in this manner in accordance with the third embodiment of the present invention has, first of all, the similar effect as the mobile phone in accordance with the first embodiment. In addition, it is possible to form an image in a broader region with image pickup device 30 since reflection plane 20f has convex surface 20t.

### (Fourth Embodiment)

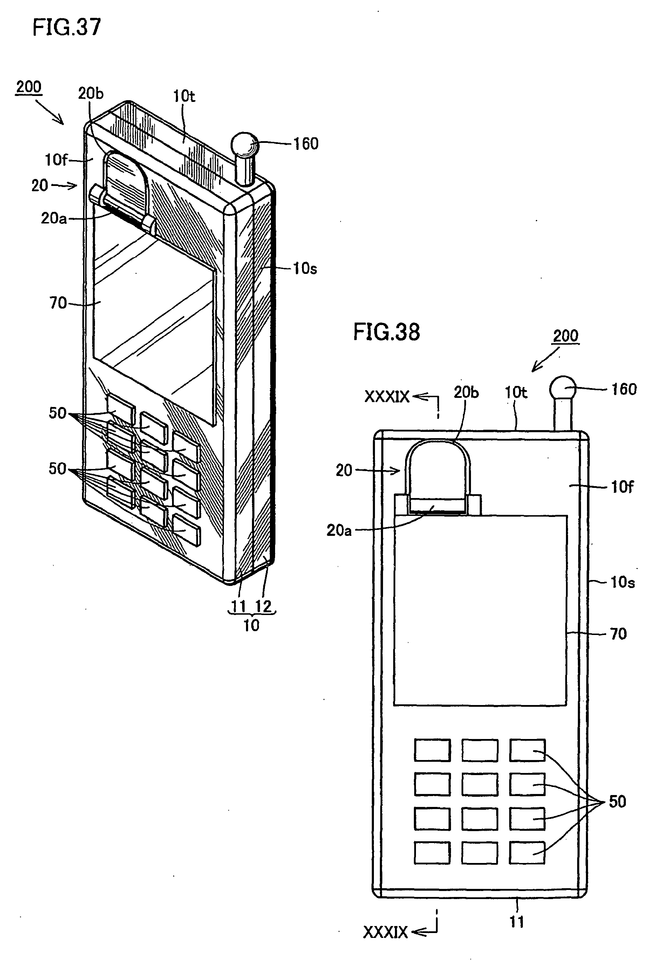

Fig. 37 is a perspective view of the mobile phone in accordance with a fourth embodiment of the present invention, illustrating the closed reflector plate. Fig. 38 is a front view of the mobile phone in accordance with the fourth embodiment of the present invention, illustrating the closed reflector plate. Referring to Figs. 37 and 38, the mobile phone in accordance with the fourth embodiment of the present invention differs from mobile phone 200 in accordance with the third embodiment in that reflector plate 20 is provided on main surface 10f. One end 20a of reflector plate 20 is pivotably attached to the side of window 70. The other end 20b is arranged on the side of top surface 10t. It is noted that top surface 10t is only provided with antenna 160 but not provided with a reflector plate.

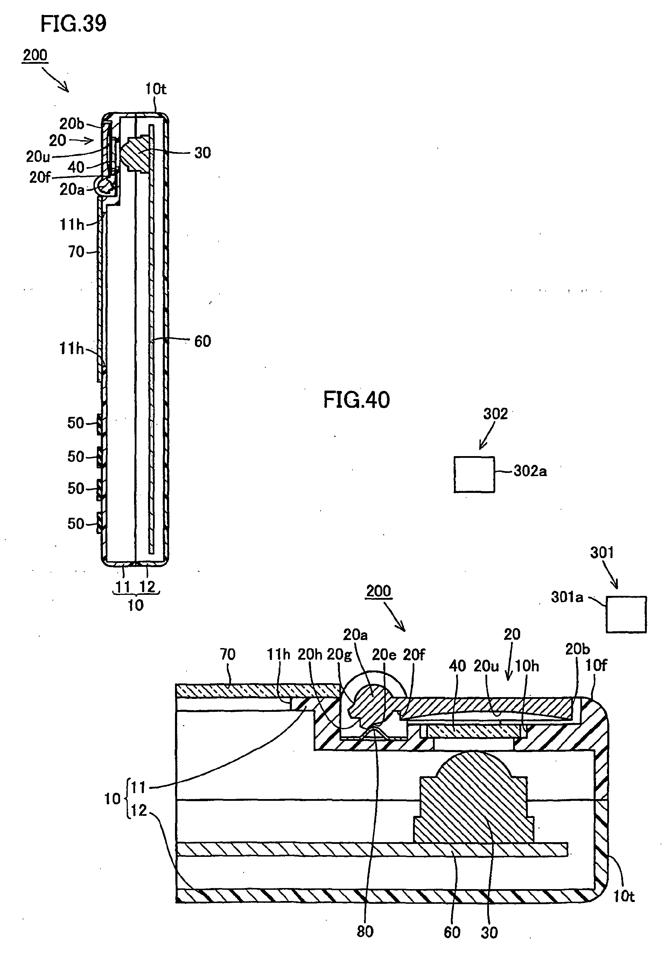

Fig. 39 is a cross sectional view taken along a line XXXIX - XXXIX in Fig. 38. Referring to Fig. 39, reflection plane 20f of reflector plate 20 has a concave surface 20u. Concave surface 20u is shaped like an approximate arc and is formed to be farthest from protective window 40 at its central portion. In other words, the thickness of reflector plate 20 is reduced at the central portion and the thickness of reflector plate 20 is increased toward one end 20a or the other end 20b.

Fig. 40 is a cross sectional view showing the reflector plate in Fig. 39 in enlargement. Referring to Fig. 40, retlector plate 20 in accordance with the second embodiment shown in Fig. 16 is different in that concave surface 20u is formed in reflection plane 20f of reflector plate 20. The center of curvature of concave surface 20u is positioned on the optical axis of image pickup device 30, and concave surface 20u is formed to arc gradually. It is noted that although concave surface 20u is illustrated in Fig. 40 in the arced shape in section, concave surface 20u is spherical and three-dimensionally extends, actually.

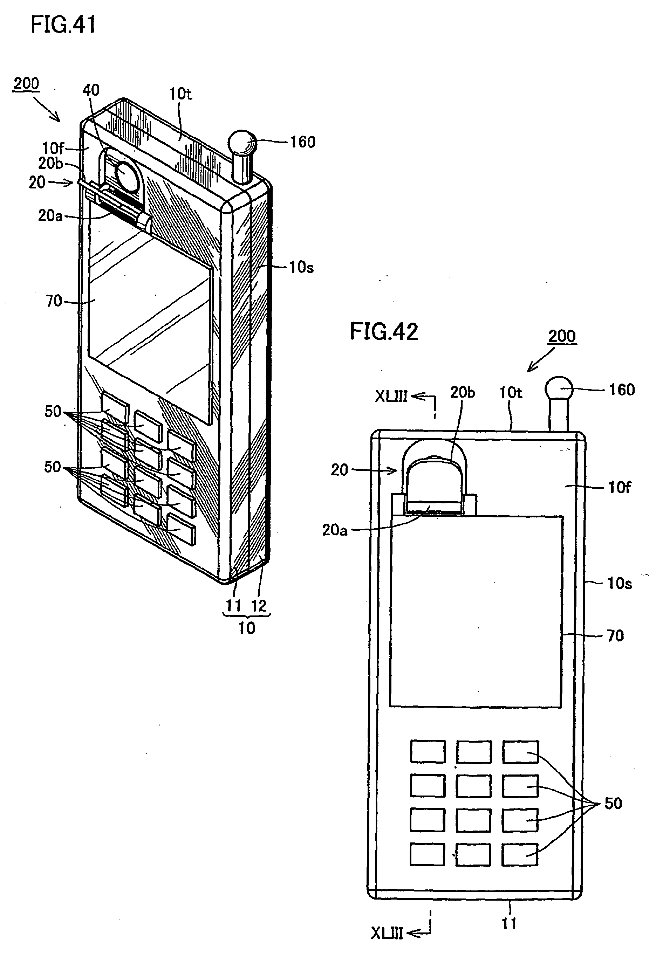

Fig. 41 is a perspective view of the mobile phone in accordance with the fourth embodiment of the present invention, illustrating the reflector plate positioned in a first position. Fig. 42 is a front view of the mobile phone in accordance with the fourth embodiment of the present invention, illustrating the reflector plate positioned in the first position. Referring to Figs. 41 and 42, reflector plate 20 is pivoted from the state shown in Fig. 40 to reveal protective window 40 which was covered with reflector plate 20. Protective window has a disc-like shape and is embedded in casing 10. Reflection plane 20f is positioned to face protective window 40.

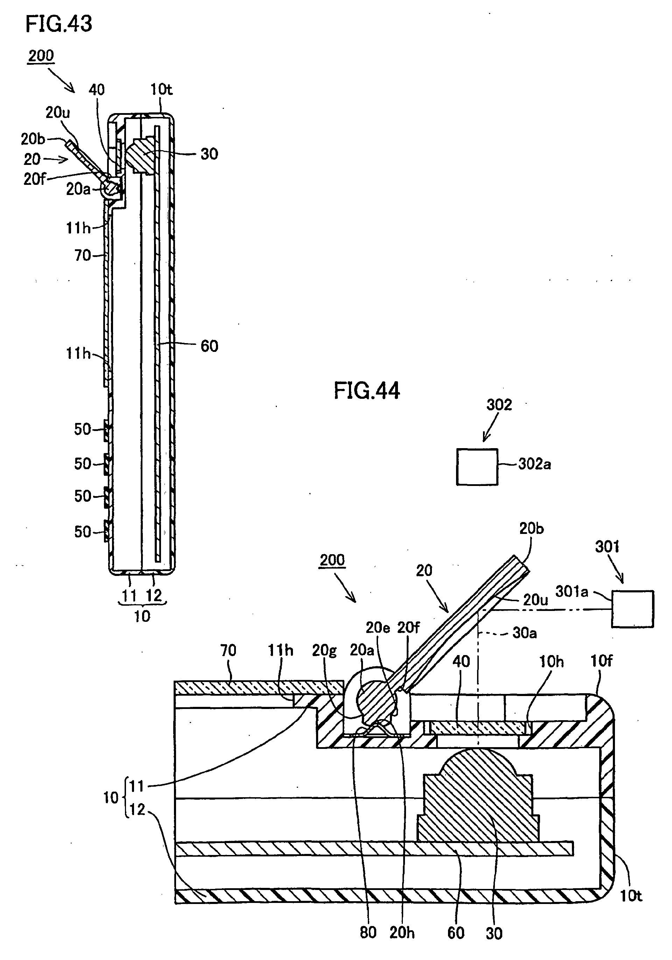

Fig. 43 is a cross sectional view taken along a line XLIII - XLIII in Fig. 42. Referring to Fig. 43, when reflector plate 20 is pivoted about 45° from the position shown in Fig. 40 about one end 20a in the direction that is far away from top surface 10t, reflector plate 20 is positioned in the first position shown in Fig. 43. Reflection plane 20f of reflector plate 20 reflects light from the outside and directs the light to image pickup device 30. Image pickup device 30 can thus form an image from the outside. Reflection plane 20f of reflector plate 20 is provided with concave surface 20u.

Fig. 44 is a cross sectional view showing the reflector plate in Fig. 43 in enlargement. Referring to Fig. 44, in the first position, concave portion 20h is fitted on leaf spring 80, of concave portions 20e, 20h and 20g provided on one end 20a of reflector plate 20. Reflector plate 20 is thereby positioned from the state shown in Fig. 40 to the position in which reflector plate 20 is pivoted about 45° about one end 20a. Optical axis 30a of image pickup device 30 intersects reflection plane 20f of reflector plate 20 for reflection on reflection plane 20f. The image of first object 301a positioned in first region 301 is thus reflected on reflection plane 20f to reach image pickup device 30. Image pickup device 30 can thus form the image of first object 301a. It is noted that since protective window 40 is transparent, the image of first object 301a is formed at image pickup device 30 without being blocked by protective window 40. Since light is reflected on concave surface 20u to reach image pickup device 30, an image of a portion of first object 301a is formed in a magnified manner. In other words, although the area in which an image is formed is narrowed, an image of a magnified small portion can be formed.

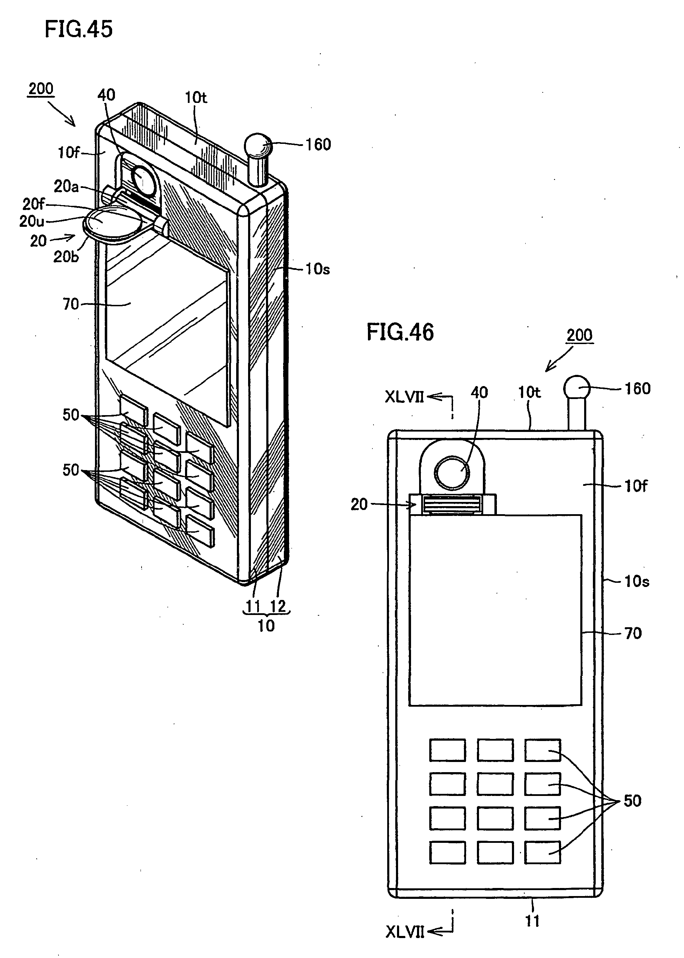

Fig. 45 is a perspective view of the mobile phone in accordance with the fourth embodiment of the present invention, illustrating the reflector plate positioned in a second position. Fig. 46 is a front view of the mobile phone in accordance with the fourth embodiment of the present invention, illustrating the reflector plate positioned in the second position. Referring to Figs. 45 and 46, when reflector plate 20 is pivoted about 45° from the position shown in Fig. 44, reflector plate 20 is positioned to extend approximately orthogonally to main surface 10f as shown in Figs. 45 and 46. In Figs. 45 and 46, reflector plate 20 is positioned in the second position. Reflection plane 20f extends approximately orthogonally to main surface 10f.

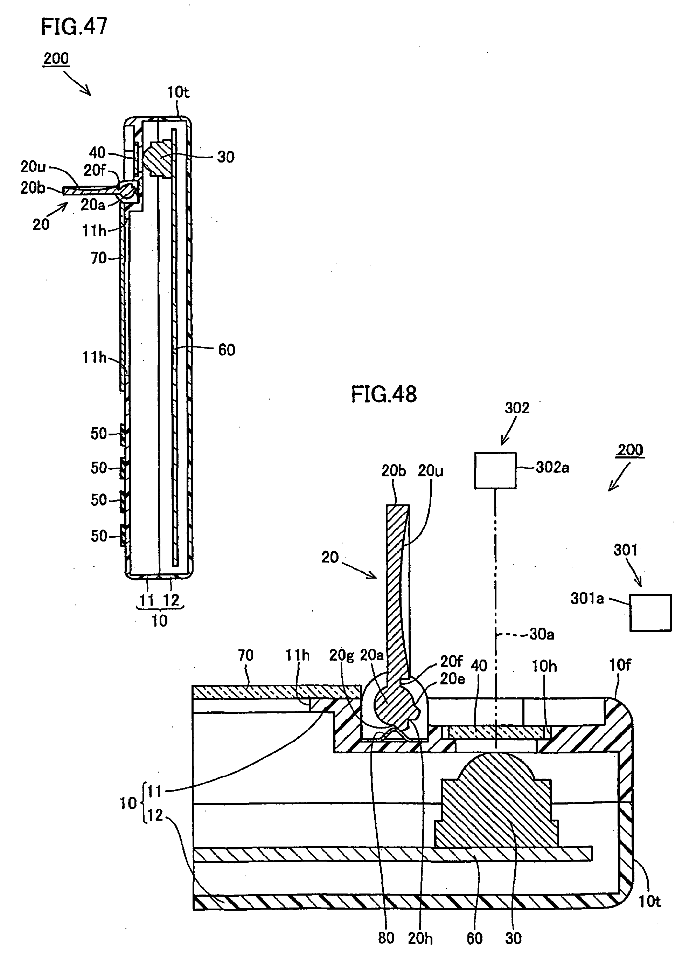

Fig. 47 is a cross sectional view taken along a line XLVII - XLVII in Fig. 46. Referring to Fig. 47, when reflector plate 20 is positioned in the second position, main surface 10f is approximately orthogonal to reflection plane 20f. Since protective window 40 is not covered with reflector plate 20, image pickup device 30 can form an image of an object present in the direction that is orthogonal to the longitudinal direction of casing 10.

Fig. 48 is a cross sectional view showing the reflector plate in Fig. 47 in enlargement. Referring to Fig. 48, when reflector plate 20 is positioned in the second position, concave portion 20g provided on one end 20a is fitted on leaf spring 80. Reflector plate 20 is positioned to be upright relative to main surface 10f. The other end 20b of reflector plate 20 is positioned in the position that is farthest from top surface 10t. Optical axis 30a of image pickup device 30 extends approximately parallel to reflection plane 20f of reflector plate 20. Image pickup device 30 can form the image of second object 302a present in second region 302. It is noted that optical axis 30a extends approximately parallel to the normal direction of substrate 60. Optical axis 30a does not intersect reflection plane 20f, and image pickup device 30 can form the image of second object 302a which is not reflected on reflection plane 20f. It is noted that since light is not reflected on concave surface 20u in the state shown in Fig. 48, a portion is not shown in a magnified manner.

The mobile phone configured in this manner in accordance with the fourth embodiment of the present invention has the similar effect as the mobile phone in accordance with the second embodiment. In addition, light is reflected on concave surface 20u, so that an image of a portion of an object can be formed in a magnified manner.

### (Fifth Embodiment)

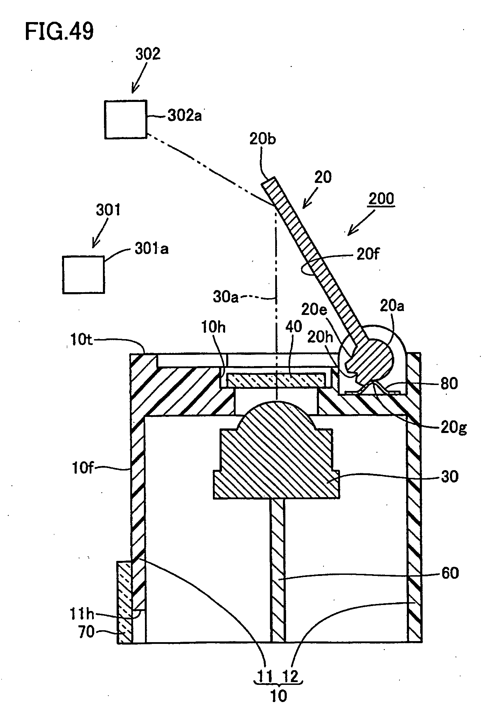

Fig. 49 is a cross sectional view of the mobile phone in accordance with a fifth embodiment of the present invention. Referring to Fig. 49, mobile phone 200 in accordance with the fifth embodiment of the present invention differs from the mobile phone in accordance with the first embodiment in that optical axis 30a intersects reflection plane 20f when reflector plate 20 is positioned in the second position as shown in Fig. 49. More specifically, reflection plane 20f intersects optical axis 30a when reflector plate 20 is positioned in the first position, while reflection plane 20f intersects optical axis 30a when reflector plate 20 is positioned in the second position. Therefore it is possible to form the image of second object 302a present in second region 302. It is noted that the position of concave portion 20g is different from that in mobile phone 200 of the first embodiment to position reflector plate 20 in the second position.

The mobile phone configured in this manner in accordance with the fifth embodiment of the present invention has the similar effect as the mobile phone in accordance with the first embodiment. Although the embodiments of the present invention have been described in the above, the embodiments shown herein may be susceptible to various modifications. First, as shown in Fig. 49, the mechanism in which reflection plane 20f of the reflector plate positioned in the second position intersects optical axis 30a may be incorporated in the mobile phone in the second to fourth embodiments. Furthermore, although reflector plate 20 is shown as being positioned in the first and second positions, the present invention is not limited thereto and reflector plate 20 may be positioned in various positions in which reflector plate 20 intersects the optical axis.

It is should be understood that the embodiments disclosed herein are by way of illustration and not taken by way of limitation. The scope of the present invention is shown not in the forgoing description but in the claims, and it is intended that all equivalents to the claims and modifications falling in the scope of the claims should be embraced.

### Industrial Applicability

The present invention can be used in the field of mobile phones.

## Claims

1. A mobile terminal comprising:
a casing (10);
an image pickup device (30) accommodated in said casing (10) and having an optical axis (30a); and
a reflector plate (20) having one end (20a) and the other end (20b) and having a reflection plane (20f), said one end (20a) being pivotably attached to said casing (10), wherein
said reflector plate (20) is positioned in a first position in which said reflection plane (20f) intersects said optical axis (30a) so that said image pickup device (30) forms an image in a first region (301) which is reflected on said reflection plane (20f), and
said reflector plate (20) is pivoted from said first position to be positioned in a second position so that said image pickup device (30) forms an image in a second region (302) different from the first region (301).

2. The mobile terminal according to claim 1, wherein
said reflection plane (20f) intersects said optical axis (30a) when said reflector plate (20) is positioned in said first position, while said reflection plane (20f) does not intersect said optical axis (30a) when said reflector plate (20) is positioned in said second position.

3. The mobile terminal according to claim 1, wherein
said reflection plane (20f) intersects said optical axis (30a) when said reflector plate (20) is positioned in said first position, while said reflection plane (20f) intersects said optical axis (30a) when said reflector plate (20) is positioned in said second position.

4. The mobile terminal according to claim 1, further comprising a transparent member (40) attached to said casing (10) to be positioned between said image pickup device (30) and said reflector plate (20) for sealing said image pickup device (30) in said casing (10).

5. The mobile terminal according to claim 1, further comprising a positioning portion (80) being in contact with said one end (20a) of said reflector plate (20) for positioning said reflector plate (20) in the first position and the second position.

6. The mobile terminal according to claim 1, wherein
said reflector plate (20) may be positioned in a third position in which said reflection plane (20f) is approximately orthogonal to said optical axis (30a).

7. The mobile terminal according to claim 1, wherein
said reflection plane includes a convex surface (20t).

8. The mobile terminal according to claim 1, wherein
said reflection plane includes a concave surface (20u).
